# EUROPEAN PATENT APPLICATION

(11) **EP 1 810 906 A2**
(43) Date of publication of application: **25.07.2007**
(21) Application number: 07001155.6
(22) Date of filing: 19.01.2007
(51) Int. Cl.: B60T 13/36, B60T 8/1761, B60T 8/34, E02F 9/02

(54) **Working machine**

(30) Priority: 20.01.2006 GB 0601146
(71) Applicant: J.C. BAMFORD EXCAVATORS LIMITED, Uttoxeter Staffordshire ST14 5JP (GB)
(72) Inventor: Carswell, Ian Harrold, Doveridge Derbyshire DE6 5NA (GB)
(74) Representative: Lucking, David John

(57) **Abstract**

A working machine (10) has a body (11), a ground engaging structure (15, 16), and a first working arm (25) mounted on the body (11) and extending forwardly of a front end of the body (11), and a second working arm (32) carried at or towards a rear end of the body (11), the ground engaging structure including a front pair of wheels (15), and a rear pair of wheels (16), each pair of wheels (15, 16) being carried on a respective front and rear axle (18, 19) suspended from the body (11), the first working arm (25) in use carrying a loading implement (28) for performing loading operations, and the second working arm (32) carrying an excavating implement (35) for performing excavating operations, and the machine (10) further including a transmission (20) for providing drive from an engine (13) to the front and rear wheels (15, 16), and a braking system (B) including for each wheel (15, 16) a braking device (56) including a rotatable member (57) which rotates with the wheel (15, 16) and a braking member (58) which is moveable by a fluid operated device into frictional engagement with the rotating member (57) to effect braking, the braking system (B) further including a brake control system (110) which provides a brake anti-locking function to resist any braked wheel (15, 16) skidding relative to the ground as a result of becoming locked during braking when a low friction condition exists between the wheel (15, 16) and the ground.

## Description

This invention relates to a working machine for performing work operations such as loading and excavating.

More particualrly but not exclusively the invention relates to a working machine known as a "backhoe loader" which has a first working arm, at or towards a front of the machine, for performing loading operations, and a second working arm towards a rear of the machine, for performing excavating operations.

Such machines conventionally may only be driven over the ground at relatively slow speeds, for example around 30 km per hour. Whereas this speed is adequate when such a machine is performing work operations, it is overly slow for road travel, for example for moving the machine from one location to another. Accordingly it is usual to transport such machines on a loader vehicle between work locations.

It is increasingly becoming a requirement for such machines to be able to travel over the ground at greater speeds, and proposals have been put forward for backhoe loaders which are able to travel at fast speeds, well over 40 km per hour. Such machines may, in contrast to conventional backhoe loader machines, be provided with a suspension to facilitate high speed travel.

Conventional backhoe loader machines typically are provided with air operated brakes which are operable usually, only to apply a braking force to the rear wheels, which often are larger than the front wheels, and are the primary driven wheels.

Higher speed backhoe loader machines require more efficient braking systems than slower machines, and higher specification braking systems require that both front and rear wheels are braked.

According to a first aspect of the invention we provide a working machine according to claim 1.

In accordance with the present invention a machine is provided with a braking system appropriate for braking the machine at high speed and in which steerability is maintained during braking by virtue of the brake anti-locking function.

The suspension suspending each of the front and rear axles may be of the kind which is preferably non-reactive by which we mean that the vertical load on the respective wheels carried by the axle and hence the traction between the wheels and the ground, does not significantly vary in response to changes in the driving torque applied to the wheels through the transmission.

Such a suspension may include for each axle at each side of the machine, a pair of links, one link of each pair being above the other relative to the ground, the links each pair being pivotally connected at their one ends to relative to the body and at their other ends to the respective axle. Damping struts to damp axle movements, may be provided between the axles and the body.

Each braking device is preferably operated by hydraulic fluid pressure.

The braking devices for applying braking to each of the wheels, may be operated to apply the brake by hydraulic fluid pressurised by an air-hydraulic actuator.

Thus the machine may include an air system which includes the air-hydraulic actuator.

Preferably the brake control system includes for each wheel, a wheel speed sensor, the brake control system also including a controller responsive to wheel speed signals from each of the wheel speed sensors, and operative to determine whether any braked wheel is skidding relative to the ground as a result of becoming locked during braking, and in the event that a skidding condition is determined, the controller modulating the hydraulic fluid pressure provided to apply braking to at least the skidding wheel.

For example, the controller may modulate the hydraulic pressure provided to apply braking by cycling the pressure between a pressure reduction phase and a pressure increase phase although a cycle may also include a pressure hold phase between the pressure reduction and the pressure increase phases.

Although the controller may modulate the hydraulic fluid pressure provided to apply braking braking to the at least one skidding wheel only, preferably the controller modulates the hydraulic fluid pressure provided to apply braking to both wheels of the front and/or the rear axle where any or both wheels are determined to be skidding relative to the ground during braking as a result of becoming locked.

Preferably the hydraulic fluid pressure is modulated by modulating air pressure supplied to the air-hydraulic actuator.

Embodiments of the invention will now be described with the aid of the accompanying drawings in which:-
FIGURE 1 is a side illustrative view of a machine in accordance with the present invention;
FIGURE 1a is an illustrative side view of part of the machine of figure 1, showing a non-reactive suspension;
FIGURE 2 is a schematic diagram of a braking system of the machine of Figure 1.

Referring to the drawings there is shown a working machine 10 which includes a body 11 including a housing 12 for an engine 13 which provides power for the machine 10. The machine 10 further includes a ground engaging structure including a front pair of wheels 15 and a rear pair of wheels 16, the front pair of wheels 15 being carried on a front axle 18 and the rear pair of wheels 16 being carried on a rear axle 19.

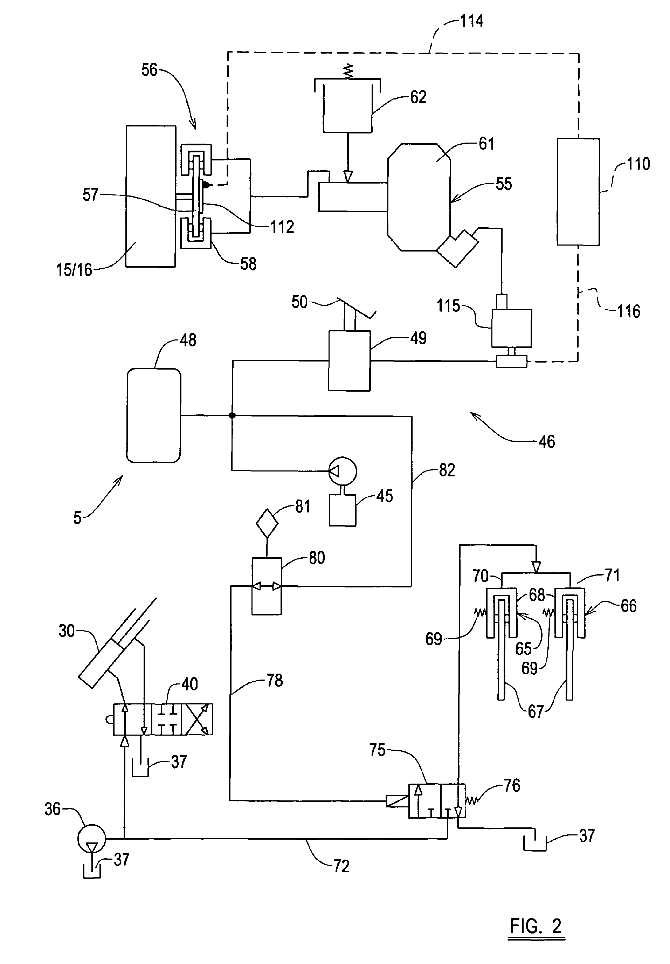

Both pairs of wheels 15, 16 in this example are driven wheels, being driven by their respective axles 18, 19 from respective transmission members 22, 23 of a machine transmission 20 to which drive is provided from the engine 13 via drive shaft 21. All four wheels 15, 16 are braked by a braking system 5 which is shown schematically in figure 2.

The machine 10 is a so-called backhoe loader, having at a front of the machine and extending forwardly therefrom, a first working arm, i.e. a loader arm 25 provided by, in this example, a pair of arm elements 26, 27 which extend either side of the engine housing 12. The loader arm 25 is mounted on the body 11 at an inboard end, for pivotal up and down movement about a first generally horizontal axis A, under the control of one or a pair of hydraulically powered lifting actuators 30, The loader arm 25 carries at its outboard end, a loading implement which is a bucket 28 in this example, which is pivotal relative to the loader arm 25 about a second generally horizontal axis B, by a hydraulically operated actuator (not shown).

The machine 10 further includes at a rear end thereof, a second working arm i.e an excavating arm 32 which has a boom part 33 mounted on the body 11 for pivotal movement about both a third generally horizontal axis C and a generally upright axis D, and a dipper part 34 which is pivotal relative to the boom part 33 about a fifth generally horizontal axis E relative to the boom part 33. The boom 33 and dipper 34 parts of the excavating arm 32 are relatively pivotable by means of further hydraulic actuators (not shown), and the excavating arm 32 carries an excavating tool, in this case an excavating bucket 35 for excavating, which is pivotable relative to the dipper part 34 about another generally horizontal axis F, by a hydraulic actuator.

Controls for operating the loading and excavating arms 25, 32 are operable from within an operator's cab 9.

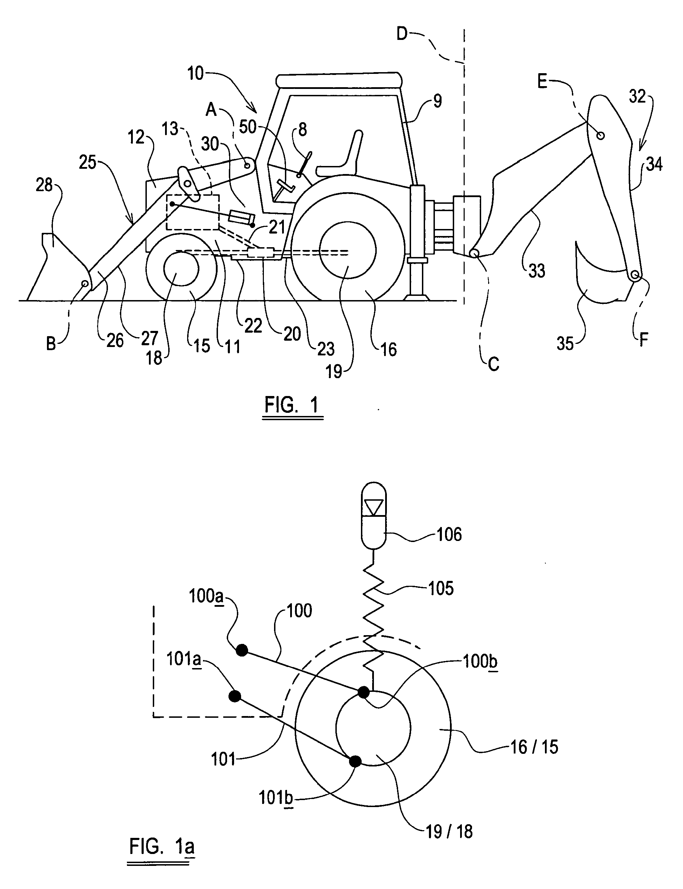

Referring now particularly to figure 1 a, it can be seen that the rear axle 19 carrying the pair of rear wheels 16, may be suspended from the body 11 of the machine 10 by a non-reactive suspension.

At each side of the machine 10, the rear axle 19 is pivotally connected to a pair of links 100, 101, one of which i.e the link indicated at 100, being above the other 101 relative to the ground, the links 100, 101 of each pair being pivotally connected at their one ends 100a; 101 a relative to the body 11 and at their other ends 100b; 101 b to the rear axle 19.

Damping struts 105, one at each side of the body 11, are provided to damp axle 19 movements, between the axle 19 and the body 11, the struts in this example being hydraulic devices (e.g. pistons within cylinders), with gas springs 106, but other damping strut arrangements are possible.

In figure 1a it can be seen that the links 100, 101 are leading links, i.e. they extend forwardly from the rear axle 19, but in another construction may be trailing links.

The front axle 18 is suspended from the body 11 by a non-reactive suspension substantially similar to that shown in figure 1a although the pivoted links 100, 101 at each side of the body 11, are preferably trailing links.

Although it is preferred for each of the front and rear axles 18, 19 to be suspended from the body 11 by a non-reactive suspension as described, other suspension arrangements are possible.

Pressurised hydraulic fluid for powering the various hydraulic actuators 30 of the working arms 25, 32 is provided by a hydraulic pump 36 (see figure 2) driven directly from the engine 13, the pump 36 pumping fluid from a reservoir 37 to a hydraulic system, fluid flow to the various actuators 30 being controlled by one or more hydraulic control valves 40 which may be manually or electrically operated as required. Thus a supply of pressurised hydraulic fluid is always available while the engine 13 is running.

The working machine 10 further includes an air compressor 45 which may be driven from for example, an engine turbocharger, or otherwise from the engine 13 or from a motor. The air compressor 45 pressurises air in a pressurised air system 46, and particularly charges a reservoir 48, the pressurised air being usable as hereinafter described, by the braking system 5 for applying service brakes of the machine 10.

The pressurised air is delivered to an air valve 49 which is actuated by a brake pedal 50 which is located in the operator's cab 9. The proportion of air which is permitted to pass the valve 49 depends upon the extent to which the foot pedal 50 is depressed and thus the air pressure downstream of the valve 49 is representative of a brake demand. The further the pedal 50 is depressed, up to its full extent of depression when substantially all the air delivered to the air valve 40 may pass therethrough to apply full braking pressure, the more pressurised air is provided to air-hydraulic actuators, one of which is indicated at 55, for applying service brakes.

The ground engaging structure provides for each wheel 15, 16 in this example, a braking device 56 for applying braking to the wheel 15, 16, each braking device 56 being operated to apply the brake by hydraulic fluid pressurised by an air-hydraulic actuator 55. Each air-hydraulic actuator 55 may be operative to supply pressurised hydraulic fluid to one or a plurality of the braking devices 56.

In this example, each braking device 56 is a pad and disc type device including a rotatable member namely a disc 57, which rotates with the associated wheel 15, 16, and a braking member, i.e. a pad 58 (or pads) which is/are moveable into frictional engagement with the rotating disc 57 to effect braking, by hydraulic fluid acting for example through a "slave" piston and cylinder arrangement.

The air-hydraulic actuator 55 pressurises hydraulic fluid from a brake fluid reservoir 62, by means of an air powered servo 61 mechanism such that the hydraulic fluid pressure developed, and accordingly the extent of braking, depends upon the air pressure delivered from the pedal operated air valve 49. Thus the further an operator depresses the brake pedal 50, the greater the braking force applied by the braking device 56 to its associated wheel 15, 16, to match the brake demand.

The service brakes 56 preferably are released by mechanical springs when air pressure is no longer supplied to the air-hydraulic actuators 55, i.e. when the brake pedal 50 is released. The foot pedal 50 too may be returned to its uppermost, unbraking position, by a mechanical spring, although in each case some other brake return/pedal release mechanism may be provided as required.

In accordance with the present invention, the braking system 5 for the machine 10 further includes a brake control system including a controller 110 which provides a brake anti-locking function to resist any braked wheel 15, 16 skidding relative to the ground as a result of becoming locked during braking when a low friction condition exists between the wheel 15, 16 and the ground.

Thus the braking system 5 includes, for each braking device 56, a wheel speed sensor 112 to sense the rotational speed of each of the wheels 15, 16 and to provide an electrical signal input to the controller 110 along a line, one of which for the one wheel shown in figure 2, is indicated at 114.

Typically the wheel speed sensor 112 includes an annulus of teeth which rotate with the wheel 15, 16 e.g. with the rotatable brake disc 57, and an optical sensing device mounted with respect to a wheel hub, for sensing the teeth as they move past the device as the wheel, and hence as the annulus, rotates. The construction of such a wheel speed sensor 112 is welll known and further description is considered unnecessary.

The controller 110 is configured to determine from the electrical signal inputs from the wheel speed sensors 112 of all or at least some of the wheels 15, 16, when the brakes are applied, whether any wheel is skidding, or is about to skid, relative to the ground as a result of becoming locked during braking when a low friction condition exists between the ground and the wheel.

This may be achieved by the controller 110 using an algorythm which compares wheel 15, 16 speeds as sensed, and makes calculations as is well known in the art of anti-lock braking technology.

In the event that a skidding or potential skidding condition is determined, the controller 110 is operative to modulate the hydraulic fluid pressure provided by the air-hydraulic actuator 55 which provides hydraulic fluid pressure to apply braking, to at least the skidding wheel 15, 16. Preferably though, such modulated hydraulic fluid pressure is supplied at least to both the wheels 15 or 16 on the axle 18, 19 on which a skidding or potentially skidding wheel is sensed, and more preferably, to all four wheels 15, 16 in the event that any one wheel 15, 16 is detemined to be skidding or about to skid.

Typically, the controller 110 may modulate the hydraulic pressure provided to apply braking by cycling the hydraulic fluid pressure provided by the air - hydraulic actuator 55 or actuators, between a pressure reduction phase and a pressure increase phase although a cycle may also include a pressure hold phase between the pressure reduction and the pressure increase phases. In each case, by cycling releasing and applying the braking force applied to a wheel, steerability of the machine 10, even at high speeds may be maintained during braking without risk of loss of control.

Such modulation of the hydraulic fluid pressure is preferably achieved by modulating the brake demand pressurised air signal which is delivered from the foot pedal 50 valve 49. Thus the braking system B may include a single one, or possibly a plurality of modulating air pressure valves 115, which in accordance with an electrical control signal which passes along a line 116 from the controller 110 to the modulating air pressure valve 115, modulates the demand signal from the foot brake 50 valve 49, which is applied to the air-hydraulic actuator or actuators 55.

Where only a single modulating air pressure valve 115 is provided, this would vary the brake demand signal for all four wheels 15, 16, but where a plurality of such modulating air pressure valves 115 are provided, for example with each air pressure modulating valve 115 serving only one or two of the air-hydraulic actuators 55 for one or two of the braking devices 56 for one or two of the wheels 15, 16, this would permit the controller 110 to modulate the brake demand signal differently for e.g. for the front and the rear wheels 15, 16, if required.

In each case, the brake demand signal is only modulated to modulate the hydraulic fluid pressure applied to the braking device 56 or devices, when a skidding condition or potential skidding condition, is determined.

The machine 10 further includes a transmission brake for applying primarily when the machine 10 is parked, and particularly when no supply of pressurised air for the service brakes 56, may be available.

ln this example, the machine 10 is four wheel driven and accordingly to achieve adequate transmission braking, two such transmission brakes, indicated at 65, 66 are provided.

Each transmission brake 65, 66 in this example, includes a disc 67 each of which is carried by a respective transmission member 23 for the rear wheel 16 drive, and 22 for the front wheel 15 drive. Also there is provided for frictionally engaging each disc 67, a pad, or pads 68 in this example. The pads 68 are urged towards and into engagement with their respective discs 67, by mechanical springs 69, and hence in their rest conditions, the transmission brakes are applied to brake the discs 67 and hence the transmission members 22,23.

However the transmission brakes 65, 66 are releasable by the application of pressurised hydraulic fluid to pressurised hydraulic fluid brake releasing devices 70, 71. By virtue of the transmission brake releasing devices 70, 71 being hydraulically releasable, notwithstanding that the springs 69 applying the brakes will be very strong springs in order to generate sufficient braking force to apply the transmission members 22, 23 adequately, the brake releasing devices 70, 71 may be made much smaller than comparable air operated units.

The pressurised hydraulic fluid for releasing the transmission brakes 65, 66 is derived from the hydraulic circuit of the machine 10, via a fluid feed line indicated at 72, the hydraulic fluid passing though a transmission brake control valve 75. The transmission brake control valve 75 is biased by a spring 76 towards a first operative condition as indicated in figure 2, in which the hydraulically operated brake releasing devices 70, 71 are each connected through the transmission brake control valve 75 to the reservoir 37 or another low pressure area, and so the devices 70, 71 will not act to release the transmission brakes 65, 66 which thus will be applied by the springs 69. In a second operative condition to which the valve 75 is moveable against the spring 76, pressurised hydraulic fluid from the supply line 72 may pass to the hydraulically operated brake releasing devices 70, 71 to release the brakes. 65,66.

The transmission brake control valve 75 is moved to its second operative condition when the transmission brakes 65, 66 are released only when pressurised air is provided to the valve 75 along an air supply line indicated at 78, in response to operation of an operator transmission brake control valve 80 from within the cab 9. Desirably the transmission brake control valve 80 is hand operated by an operator actuating a brake release lever 81.

In this example, pressurised air for releasing the transmission brakes 65, 66 is derived from the air system 46 provided for applying the service brakes 56. Thus pressurised air may be delivered from the air system 46 along a line 82 to the transmission brake control valve 80.

It will be appreciated that in the event of a failure in the air system, or when the pressure in the air system 46 deliberately is released, e.g. when it desired to park the machine 10 for long periods, no pressurised air will be available to move the transmission brake control valve 75 against its spring 76 to its second operative condition and thus the transmission brakes 65, 66 will remain or be applied. This provides for a fail safe feature in that braking from the transmission brakes 65, 66 will always be available.

Similarly in the event of any failure of the hydraulic pump 36, there will be no pressurised hydraulic fluid available actually to release the transmission brakes 65, 66. Thus the use of the pressurised air actuated transmission brake control valve 75 results in the transmission brakes 65, 66 being applied in the event of either of both air system 50 or hydraulic pressure failures.

In another example, a single transmission brake 65, 66 may be provided, particularly where the machine 10 is only a two driven wheel machine.

ln another example the transmission brakes 65, 66 need not be of the disc and pad type, but the invention may be applied to another kind of friction brake, such as drum and calliper, where the transmission member 22, 23 may carry a drum, or further alternatively, the transmission brake or brakes 65, 66 may each be a multi-interleaved plate type brake.

Pressurised air for actuating the transmission brake control valve 75 may be derived from other than the service brake air system 46, for example from a dedicated air source.

Pressurised hydraulic fluid for releasing the transmission brake control valve 75 may be derived from other than the hydraulic system of the machine 10 which includes actuator 30 and control valve 40 for operating the working arm or arms 25, 32 of the machine, for example from a dedicated pressurised hydraulic fluid supply.

The transmission brake or brakes 65, 66 to be applied by hydraulic fluid pressure, as well as released by hydraulic fluid pressure by operation of the air actuated transmission brake control valve 75.

Various other modifications are possible without departing from the scope of the present invention.

The features disclosed in the foregoing description, or the following claims, or the accompanying drawings, expressed in their specific forms or in terms of a means for performing the disclosed function, or a method or process for attaining the disclosed result, as appropriate, may, separately, or in any combination of such features, be utilised for realising the invention in diverse forms thereof.

## Claims

1. A working machine (10) having a body (11), a ground engaging structure (15, 16), and a first working arm (25) mounted on the body (11) and extending forwardly of a front end of the body (11), and a second working arm (32) carried at or towards a rear end of the body (11), the ground engaging structure (15, 16) including a front pair of wheels (15), and a rear pair of wheels (16), each pair of wheels (15, 16) being carried on a respective front and rear axle (18, 19) suspended from the body (11), the first working arm (25) in use carrying a loading implement (28) for performing loading operations, and the second working arm (32) carrying an excavating implement (35) for performing excavating operations, and the machine (10) further including a transmission (20) for providing drive from an engine (13) to the front and rear wheels (15, 16), and a braking system (B) including for each wheel (15, 16) a braking device (56) including a rotatable member (57) which rotates with the wheel (15, 16) and a braking member (58) which is moveable by a fluid operated device into frictional engagement with the rotating member (57) to effect braking, the braking system (B) further including a brake control system (110) which provides a brake anti-locking function to resist any braked wheel (15, 16) skidding relative to the ground as a result of becoming locked during braking when a low friction condition exists between the wheel (15, 16) and the ground.

2. A machine according to claim 1 **characterised in that** the suspension suspending each of the front and rear axles is non-reactive **in that** the vertical load on the respective wheels (15, 16) carried by the axle (18, 19) and hence the traction between the wheels (15, 16) and the ground, does not significantly vary in response to changes in the driving torque applied to the wheels (15, 16) through the transmission (20).

3. A machine according to claim 2 **characterised in that** the suspension includes for each axle at each side of the machine, a pair of links (100, 101), one link (100) of each pair being above the other (101) relative to the ground, the links (100, 101) of each pair being pivotally connected at their one ends (100a, 101a) to relative to the body (11) and at their other (100b, 101b) ends to the respective axle (18, 19).

4. A machine according to claim 3 **characterised in that** the suspension includes damping struts (105) to damp axle (18, 19) movements, provided between the axles (18, 19) and the body (11).

5. A machine according to any one of the preceding claims **characterised in that** each braking device (56) is operated by hydraulic fluid pressure, pressurised by an air-hydraulic actuator (55).

6. A machine according to claim 5 **characterised in that** the brake control system (110) includes for each wheel (15, 16), a wheel speed sensor (112), the brake control system (110) also including a controller (110) responsive to wheel speed signals from each of the wheel speed sensors (112), and operative to determine whether any braked wheel (15, 16) is skidding relative to the ground as a result of becoming locked during braking, and in the event that a skidding condition is determined, the controller (110) modulating the hydraulic fluid pressure provided to apply braking to at least the skidding wheel (15, 16).

7. A machine according to claim 6 **characterised in that** the controller (110) modulates the hydraulic pressure provided to apply braking by cycling the pressure between a pressure reduction phase and a pressure increase phase.

8. A machine according to claim 7 **characterised in that** the cycle includes a pressure hold phase between the pressure reduction and the pressure increase phases.

9. A machine according to claim 7 or claim 8 **characterised in that** the controller (110) modulates the hydraulic fluid pressure provided to apply braking braking to both wheels (15, 16) of the front and/or the rear axle (18, 19) where any or both wheels (15, 16) are determined to be skidding relative to the ground during braking as a result of becoming locked.

10. A machine according to claim 7, claim 8 or claim 9 **characterised in that** the hydraulic fluid pressure is modulated by modulating air pressure supplied to the air-hydraulic actuator (55).
